# FASCICULE DE BREVET EUROPEEN

(11) **EP 3 437 084 B1**
(45) Date de publication et mention de la délivrance du brevet: **27.05.2020**
(21) Numéro de dépôt: 17713748.6
(22) Date de dépôt: 10.03.2017
(51) Int. Cl.: G09B 29/10, G09F 15/00

(54) **MOBILIER D'ORIENTATION PIÉTONNE AMÉLIORE**
VERBESSERTE FUSSGÄNGERORIENTIERUNGSSTRUKTUR
IMPROVED PEDESTRIAN ORIENTATION STRUCTURE

(30) Priorité: 01.04.2016 FR 1652854
(43) Date de publication de la demande: 06.02.2019
(73) Titulaire: VOOG, 69006 Lyon (FR)
(72) Inventeur: AUDEBAUD, Matthieu, 69006 Lyon (FR)
(74) Mandataire: Cabinet Beau de Loménie
(86) Numéro de dépôt international: PCT/FR2017/050550
(87) Numéro de publication internationale: WO 2017/168070

(56) Documents cités:
- BE-A1- 904 513
- FR-A1- 2 760 863
- FR-A1- 2 767 596
- FR-A1- 2 871 607

## Description

### DOMAINE TECHNIQUE GENERAL

La présente invention concerne le domaine du mobilier d'orientation piétonne.

### ETAT DE L'ART

Le mobilier d'orientation piétonne est un outil nécessaire aux personnes qui souhaitent comprendre l'espace qui les environne et/ou trouver leur destination.

Les différents types de mobilier permettent ainsi d'orienter le public dans des sites urbains, naturels ou touristiques, et contribuent ainsi à l'attractivité de ces lieux.

De nombreuses formes d'éléments d'orientation sont communément proposées, allant de simples plans disposés sur des surfaces horizontales ou verticales, aux tables panoramiques utilisées plus communément en milieu naturel, ou encore aux éléments interactifs qui tendent à se développer. Le brevet FR2760863 donne un exemple d'élément d'orientation urbain connu.

Ces éléments d'orientation doivent répondre à de nombreuses contraintes, notamment en termes d'encombrement et de qualité de l'information transmise.

Cette dernière contrainte est particulièrement délicate à satisfaire pour des raisons techniques et cognitives. En effet, un plan local n'est facilement accessible au grand public qu'aux conditions 1) d'être toujours bien orienté par rapport à l'espace réel et 2) d'y trouver sa destination finale, quelle qu'elle soit, de telle manière que la construction mentale et la mémorisation de l'itinéraire ne soient pas trop complexes. Ce sont deux forces majeures des outils numériques (qui ne sont pas exploitables par tous, partout et tout le temps), et que ne rendent pas les outils d'orientation classique.

Il existe donc un besoin dans le domaine du mobilier urbain d'orientation pour définir un dispositif répondant de manière satisfaisante à ces différents critères.

### PRESENTATION DE L'INVENTION

La présente invention vise ainsi à proposer un élément de mobilier urbain répondant à ces différentes problématiques.

A cet effet, la présente invention propose un système d'orientation comprenant
- une base configurée pour être montée sur une surface,
- un support d'information monté sur la base,
la base comprenant une partie fixe adaptée pour être montée sur une surface, et une partie mobile montée tournante par rapport à la partie fixe selon un axe de rotation vertical,
caractérisé en ce que le support d'information est monté tournant par rapport à la partie mobile de la base, selon un axe de rotation incliné d'un angle compris entre 20° et 90° par rapport à l'axe de rotation vertical,
le système étant configuré de sorte que les rotations du support d'information et de la partie mobile sont liées de manière à ce que lesdites rotations conservent l'orientation dudit support d'information.

Selon un exemple, le support d'information comprend un ensemble d'informations cartographiques ou de guidage bien orientées par rapport à l'espace réel, ledit système étant configuré de sorte que la rotation des informations cartographiques présentes sur le support d'information soit effectuée de manière synchrone avec la rotation de la partie mobile de la base.

Le système peut comprendre en outre un carter monté fixe par rapport à la partie mobile de la base, ledit carter étant configuré de manière à masquer une partie du support d'information.

Le carter peut être totalement ou partiellement opaque, ou totalement ou partiellement transparent.

Ledit support d'information est par exemple monté tournant par rapport à la partie mobile de la base, selon un axe de rotation perpendiculaire à l'axe de rotation vertical de la base.

Le dispositif peut alors comporter deux supports d'information, typiquement parallèles entre eux, chacun monté tournant par rapport à la partie mobile de la base selon ledit axe de rotation, lesdits deux supports d'information étant disposés symétriquement par rapport à l'axe de rotation vertical de la base, et étant configurés de manière à tourner selon des sens de rotation opposés l'un par rapport à l'autre autour de l'axe de rotation lors de la rotation de la partie mobile de la base autour de l'axe de rotation vertical.

En variante, le support d'information est monté tournant par rapport à la partie mobile de la base, selon un axe de rotation incliné d'un angle supérieur ou égal à 20° et inférieur à 90° par rapport à l'axe de rotation vertical de la base.

Le support d'information est typiquement un disque.

La projection du support d'information sur l'axe de rotation vertical de la base définit alors typiquement un diamètre vertical du support d'information, ledit support d'information comprenant des informations cartographiques réalisées de sorte que les points cardinaux correspondant au diamètre vertical du support d'information correspondent aux points cardinaux définis par la projection de l'axe de rotation du support d'information sur un plan horizontal.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- les figures 1 et 2 présentent deux vues d'un dispositif selon un aspect de l'invention ;
- les figures 3 à 5 illustrent schématiquement le fonctionnement d'un tel dispositif ;
- les figures 6 et 7 présentent deux vues d'un autre mode de réalisation d'un dispositif selon un aspect de l'invention ;
- les figures 8 à 11 présentent un autre mode de réalisation d'un dispositif selon un aspect de l'invention.

Sur l'ensemble des figures, les éléments en commun sont repérés par des références numériques identiques.

### DESCRIPTION DETAILLEE

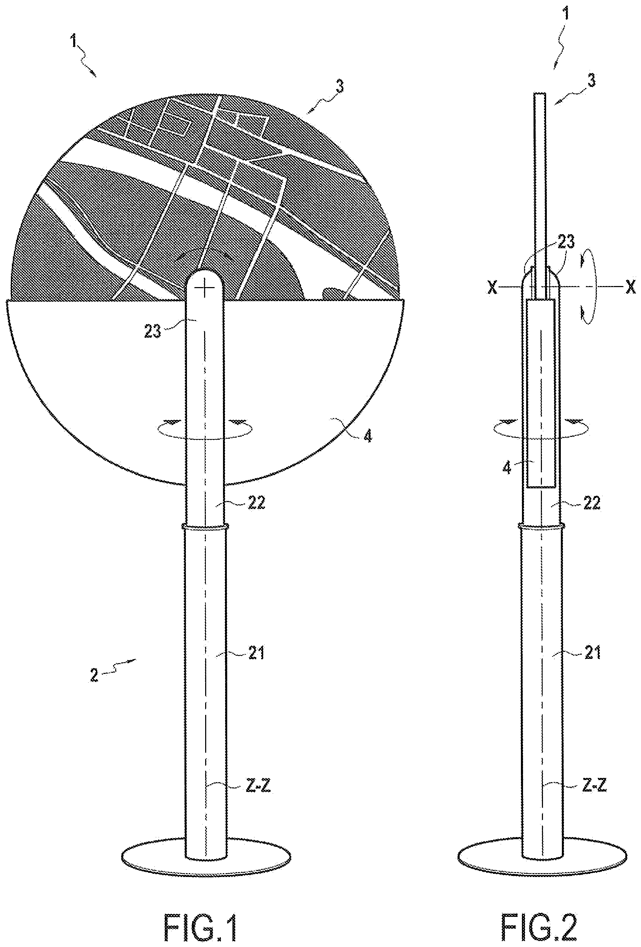

Les figures 1 et 2 présentent deux vues d'un dispositif selon un aspect de l'invention.

On représente sur ces figures un système d'orientation 1 comprenant une base 2 montée sur une surface horizontale (typiquement le sol), et un support d'information 3 monté tournant par rapport à la base 2.

La base 2 s'étend selon une direction longitudinale définissant un axe vertical Z-Z par rapport à la surface horizontale.

La base 2 comprend une partie fixe 21, adaptée pour être ancrée dans le sol, et une partie mobile 22, montée tournante par rapport à la partie fixe 21 selon un axe de rotation qui correspond à l'axe vertical Z-Z, c'est-à-dire selon la direction longitudinale de la base 2.

Un support d'information 3 est relié à la partie mobile 22 de la base 2. Dans le mode de réalisation représenté, le support d'information 3 est un disque.

Dans le mode de réalisation représenté, un carter 4 est également monté sur la partie mobile 22, de manière à recouvrir une partie du support d'information 3, correspondant ici sensiblement à la moitié inférieure du support d'information 3.

Comme on le verra par la suite, un tel carter 4 permet de limiter les informations visibles simultanément par un utilisateur, et contribue à améliorer la lisibilité des informations présentées sur le support d'information 3.

Le carter 4 est typiquement monté fixe par rapport à la partie mobile 22. Le carter 4 peut être réalisé dans un matériau totalement ou partiellement opaque, ou un matériau totalement ou partiellement transparent.

Le carter 4 peut également présenter des portions totalement ou partiellement opaques, et des portions totalement ou partiellement transparentes.

Le support d'information 3 est monté pivotant par rapport à la partie mobile 22 de la base 2, selon un axe de rotation non-parallèle à l'axe vertical Z-Z autour duquel la partie mobile 22 de la base 2 est montée tournante.

Dans le mode de réalisation représenté sur les figures 1 et 2, le support d'information 3 est monté pivotant par rapport à la partie mobile 22 de la base 2 selon un axe perpendiculaire à l'axe vertical Z-Z.

La partie mobile 22 de la base 2 comprend ici deux bras 23 formant une fourche, aux extrémités desquels est monté un axe passant par le centre du support d'information 3, et réalisant ainsi sa liaison en rotation par rapport à la partie mobile 22 de la base 2. L'axe est ici orienté selon un axe horizontal X-X, perpendiculaire à l'axe vertical Z-Z.

Deux mouvements de rotation sont donc possibles ; une rotation selon l'axe vertical Z-Z de la partie mobile 22 de la base 2 par rapport à la partie fixe 21 de la base 2, et une rotation selon l'axe horizontal X-X du support d'information 3 par rapport à la partie mobile 22 de la base 2. Ces deux mouvements de rotation sont liés, de sorte qu'une rotation selon l'un de ces axes de rotation entraîne nécessairement une rotation selon l'autre de ces axes de rotation.

Plus précisément, les rotations selon ces deux axes sont liées de manière à conserver l'orientation du support d'information 3.

Le support d'information 3 comprend des indications cartographiques ou de guidage, liées à l'environnement du système d'orientation, typiquement une carte, un plan ou des repères cartographiques.

On définit un diamètre vertical du support d'information 3, comme étant le diamètre du support d'information 3 selon l'axe vertical Z-Z.

En fonction de l'orientation du support d'information 3, ce diamètre vertical définit une droite s'étendant entre deux points cardinaux donnés.

A titre d'exemple, on considère que le diamètre vertical correspond à la droite N-S, c'est-à-dire la droite passant par les points cardinaux Nord et Sud représentés sur le support d'information 3.

Les rotations sont ainsi liées, de sorte qu'à tout moment, l'orientation à laquelle correspond le diamètre vertical du support d'information corresponde à l'orientation de l'axe horizontal X-X.

A titre d'exemple, on considère une configuration initiale dans laquelle l'axe X-X est orienté selon une direction Nord-Sud, et le diamètre vertical du support d'information 3 correspond également à la direction Nord-Sud des informations représentées sur le support d'information 3.

Lorsque l'utilisateur applique un mouvement de rotation sur le support d'information 3, par exemple de 90° autour de l'axe X-X, le diamètre vertical du support d'information 3 correspondra alors à la direction Est-Ouest des informations représentées sur le support d'information 3 Les rotations du support d'information 3 et de la partie mobile 22 sont alors liées de sorte que cette rotation du support d'information 3 entraîne une rotation de la partie mobile 22 autour de l'axe Z-Z, de sorte que l'axe X-X soit également orienté selon la direction Est-Ouest.

Si on considère que les informations cartographiques représentées sur le support d'information sont réparties à 360° de manière régulière, alors les rotations du support d'information 3 et de la partie mobile 22 sont typiquement configurées de manière à ce qu'une rotation du support d'information 3 d'un angle donné autour de l'axe X-X entraîne une rotation de la partie mobile 22 de ce même angle autour de l'axe Z-Z, et inversement.

Ainsi, lorsqu'un utilisateur manipule le système d'orientation 1, ce dernier va naturellement orienter l'utilisateur selon une direction correspondant aux informations présentées sur le support d'informations 3, facilitant de ce fait l'orientation de l'utilisateur.

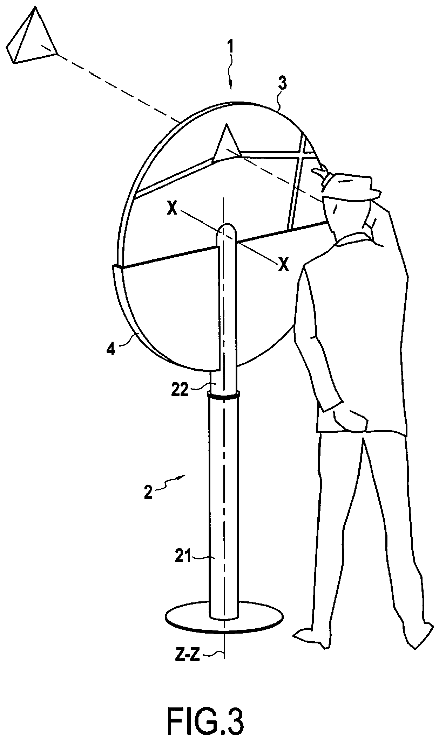

Les figures 3, 4 et 5 illustrent ainsi schématiquement l'utilisation d'un tel système d'orientation 1 tel que présenté précédemment sur les figures 1 et 2.

On représente ainsi schématiquement deux éléments géographiques, ici matérialisés par un cube et une pyramide.

Dans la situation illustrée sur la figure 3, l'utilisateur a orienté le support d'information 3 de manière à trouver la pyramide. Le centre du support d'information 3 représente typiquement la position actuelle de l'utilisateur.

Il a donc positionné la représentation de la pyramide en haut du support d'information 3, face à lui. Par « en haut », on entend que la représentation de la pyramide se situe selon le diamètre vertical du support d'information 3.

Comme détaillé précédemment, le fait de positionner de la sorte la représentation de la pyramide en haut du support d'information 3 entraîne une rotation de la partie mobile 22, de manière à ce que l'axe de rotation X-X du support d'information soit orienté selon une direction correspondant à celle représentée par le diamètre vertical sur le support d'information 3.

De ce fait, en positionnant la représentation de la pyramide en haut du support d'information 3, l'axe de rotation X-X du support d'information 3 va être orienté dans une direction pointant vers la pyramide.

Ainsi, l'utilisateur positionné face au support d'information 3 va être naturellement positionné face à l'élément géographique choisi, qu'il aura placé en haut du support d'information.

Lorsque l'utilisateur souhaite s'orienter vers un autre élément géographique (par exemple le cube), il fait tourner le support d'information 3 autour de son axe de rotation X-X de manière à positionner le cube sur le diamètre vertical du support d'information 3. Comme déjà expliqué, ce mouvement de rotation du support d'information 3 autour de son axe de rotation X-X entraîne un mouvement de rotation de la partie mobile 22 de la base 2 autour de son axe vertical Z-Z.

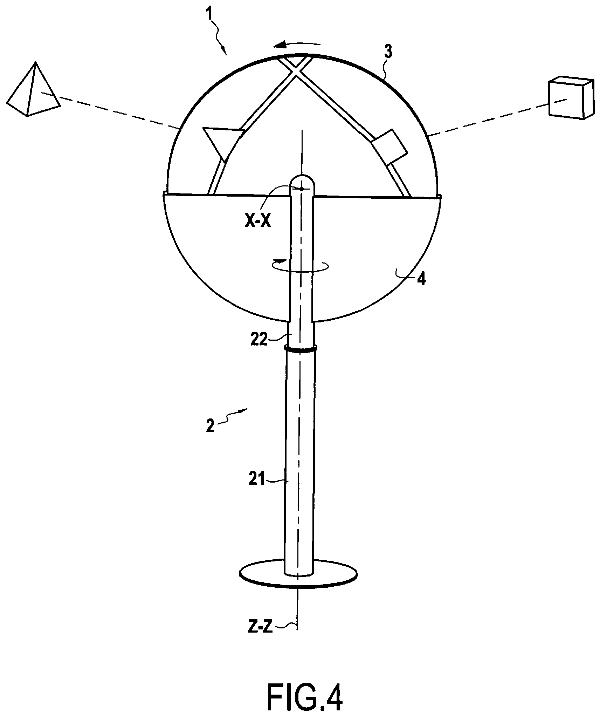

On représente schématiquement sur la figure 4 ces mouvements de rotation, repérés par deux flèches autour des axes X-X et Z-Z.

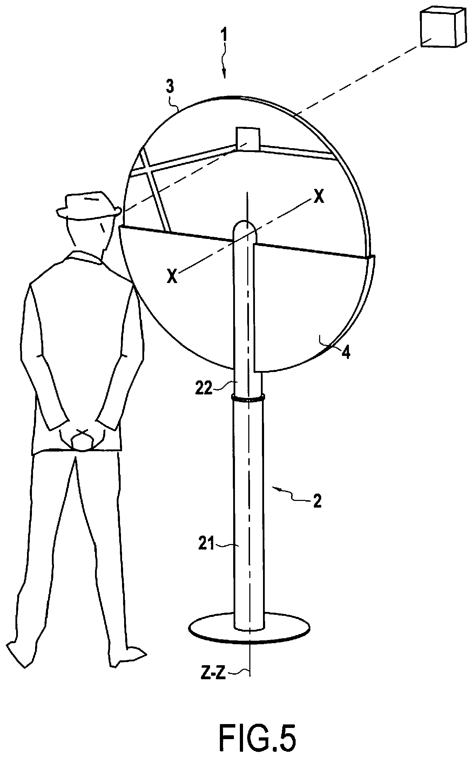

Sur la figure 5, on représente le résultat de ces rotations ; l'utilisateur a fait tourner le support d'information 3 de sorte que la représentation du cube soit sur le diamètre vertical du support d'information 3 ; de ce fait, l'axe X-X est orienté en direction de l'élément géographique correspondant.

Du fait de la rotation de la partie mobile 22 de la base 2, l'utilisateur est incité à se déplacer de manière à rester face au support d'information 3 ; il se trouve ainsi naturellement positionné face à l'élément géographique choisi.

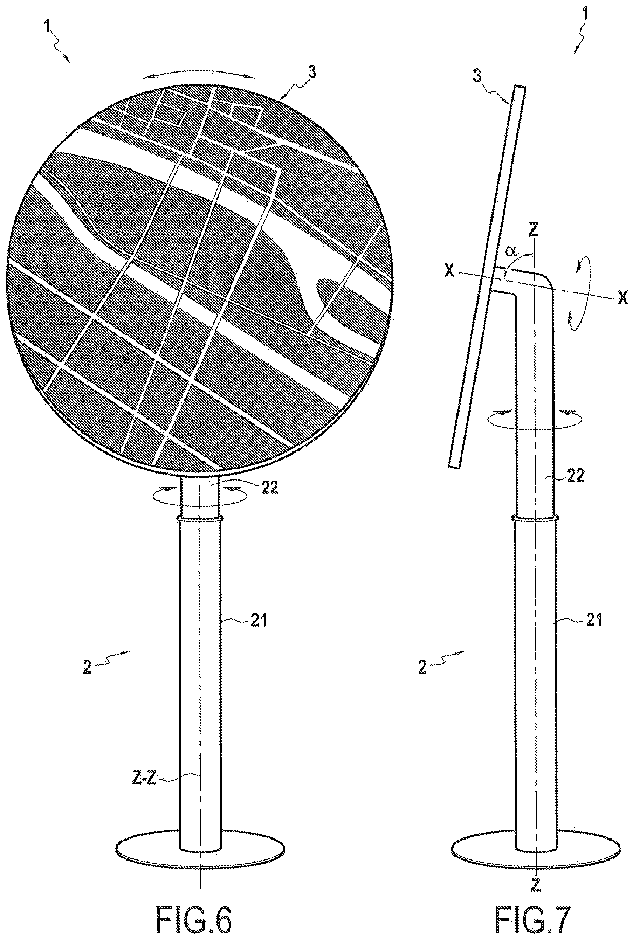

Les figures 6 et 7 représentent un autre exemple de système d'orientation 1 selon un aspect de l'invention.

Comme pour le mode de réalisation précédent, une partie du support d'information 3 peut être masqué au moyen d'un carter 4.

Dans cet exemple de réalisation, le support d'information 3 est également monté tournant par rapport à la partie mobile 22 de la base 2, mais selon un axe de rotation non-horizontal.

Le support d'information 3 est donc monté tournant par rapport à la partie mobile 22 de la base 2 selon un axe de rotation X-X, incliné d'un angle α par rapport à la direction verticale Z-Z.

L'angle α est typiquement compris entre 20° et 90°, 90° correspondant à la configuration horizontale telle que présentée précédemment en référence aux figures 1 et 2.

La liaison en rotation entre la partie mobile 22 de la base 2 et le support d'information 3 est par exemple réalisée au moyen d'une liaison pivot reliée à une face arrière du support d'information 3, la face arrière étant la face orientée vers le sol, par opposition à la face avant du support d'information 3 qui est orientée vers l'utilisateur, et destinée à recevoir des informations cartographiques.

Dans le cas où l'axe de rotation du support d'information 3 par rapport à la partie mobile 22 de la base 2 est horizontal, les deux faces du support d'information 3 sont facilement accessibles par un utilisateur. Elles peuvent donc toutes deux comporter des indications, identiques ou distinctes. Dans le cas où les deux faces du support d'information 3 comprennent des informations cartographiques ou de guidage, ces dernières sont réalisées de manière à ce que l'orientation soit conservée lors de la rotation de la partie mobile 22 et du support d'information 3 (ou des supports d'information dans le cas où ce dernier est doublé, comme on le verra par la suite).

Le fonctionnement du système tel que présenté sur les figures 6 et 7 est similaire au fonctionnement tel que déjà décrit en référence aux figures 1 à 5.

Toutefois, du fait de l'inclinaison de l'axe de rotation X-X, le diamètre vertical du support d'information correspond ici à la projection sur le support d'information 3 de l'axe vertical Z-Z.

Comme décrit précédemment, la rotation du support d'information 3 entraîne une rotation de la partie mobile 22 de la base 2 (et réciproquement), de sorte que l'axe de rotation X-X soit orienté selon une direction correspondant à la direction représentée sur le diamètre vertical du support d'information 3.

Dans la mesure où l'axe de rotation X-X est ici incliné, on considère que c'est sa projection horizontale qui est définie comme son orientation.

Ainsi, tout comme on l'a décrit précédemment en référence aux figures 3 à 5, lors de l'utilisation du système d'orientation 1, l'utilisateur va être naturellement incité à se positionner face à l'élément géographique qu'il aura placé vers le haut du support d'information 3, ou plus généralement sur le diamètre vertical du support d'information 3.

A titre d'exemple, les moyens d'entraînement en rotation du support d'information 3 et de la partie mobile 22 peuvent être configurés de sorte qu'une rotation d'un angle donné de l'un de ces éléments autour de son axe de rotation entraîne une rotation du même angle de l'autre de ces éléments autour de son axe de rotation.

La relation entre ces rotations est modulée en fonction de la nature et de l'échelle des informations représentées sur le support d'information 3.

Quelle que soit la structure du système 1, plusieurs solutions techniques peuvent être utilisées pour la réalisation des liaisons pivots et leur couplage.

Le couplage entre les deux liaisons peut par exemple être réalisé au moyen de courroies ou de chaînes, au moyen d'une transmission souple, d'une transmission par ressort, par cardan, par soufflet, par pignon et vis, ou encore par engrenages coniques.

La transmission par engrenages coniques est notamment avantageuse du fait de son encombrement réduit et de sa fiabilité importante.

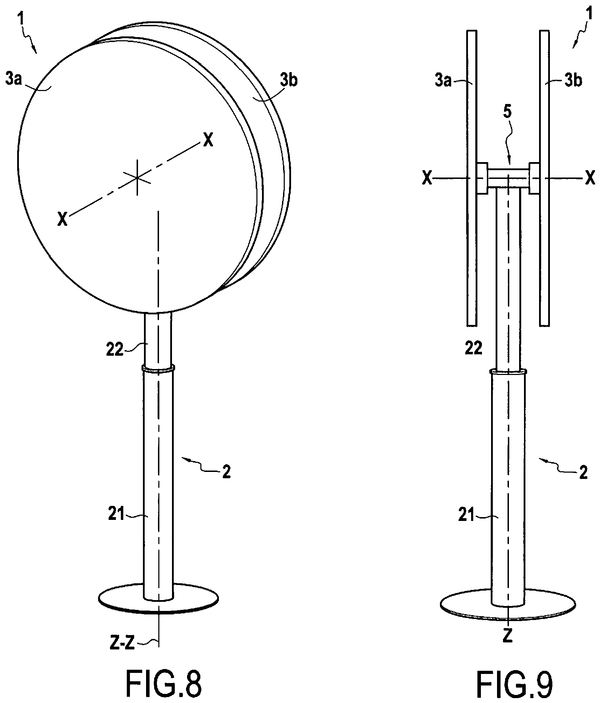

En variante, dans le cas typique où l'axe de rotation X-X du support d'information 3 par rapport à la partie mobile 22 de la base 2 est horizontal, le support d'information 3 peut être doublé. Le système d'orientation 3 comprend alors deux supports d'information 3a et 3b comprenant typiquement chacun des indications d'orientation (indications de cartographie ou de guidage), liées à l'environnement du dispositif. Un tel mode de réalisation est représenté sur les figures 8 et 9.

Comme on le voit sur ces figures, les deux supports d'information 3a et 3b sont disposés de manière symétrique par rapport à l'axe de rotation vertical Z-Z, ou typiquement par rapport à un plan comprenant l'axe de rotation vertical Z-Z et perpendiculaire à l'axe de rotation X-X, de manière à présenter chacun une face visible par un utilisateur de chaque côté du dispositif.

Ces deux supports d'information 3a et 3b sont reliés à la base via un système d'entrainement 5, assurant la mise en rotation des deux supports d'information 3a et 3b conjointement à la rotation de la partie mobile 22 de la base 2 comme vu précédemment.

Dans le cas où le dispositif d'orientation 1 comprend les deux supports d'information 3a et 3b, on comprend cependant que ces deux supports d'information 3a et 3b doivent tourner dans des sens de rotation contraires afin de conserver l'orientation des deux supports d'information 3a et 3b par rapport au milieu environnant.

On a vu précédemment qu'en considérant un support d'information unique avec les informations représentées sur une face, le support d'information 3, une rotation d'un angle β de la partie mobile 22 de la base 2 selon l'axe Z-Z entraine une rotation d'un même angle β du support d'information 3 selon l'axe X-X de manière à conserver l'orientation.

Dans le cas d'un dispositif d'orientation 1 tel que représenté sur les figures 8 et 9, les deux supports d'information 3a et 3b tournent dans des sens de rotation opposés. Ainsi, en considérant une rotation d'un angle β de la partie mobile 22 de la base 2 selon l'axe Z-Z, l'un des supports d'information 3a et 3b va tourner d'un angle β autour de l'axe X-X, tandis que l'autre des supports d'information 3a et 3b va tourner d'un angle -β autour de l'axe X-X. Le système d'entrainement 5 comprend ainsi typiquement des moyens tels que des pignons ou un renvoi d'angle assurant la rotation des deux supports d'information 3a et 3b dans des sens contraires.

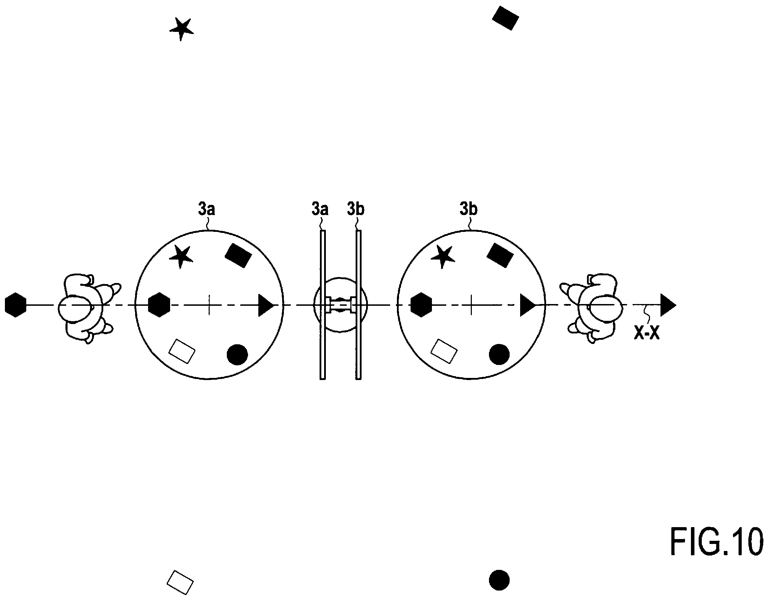

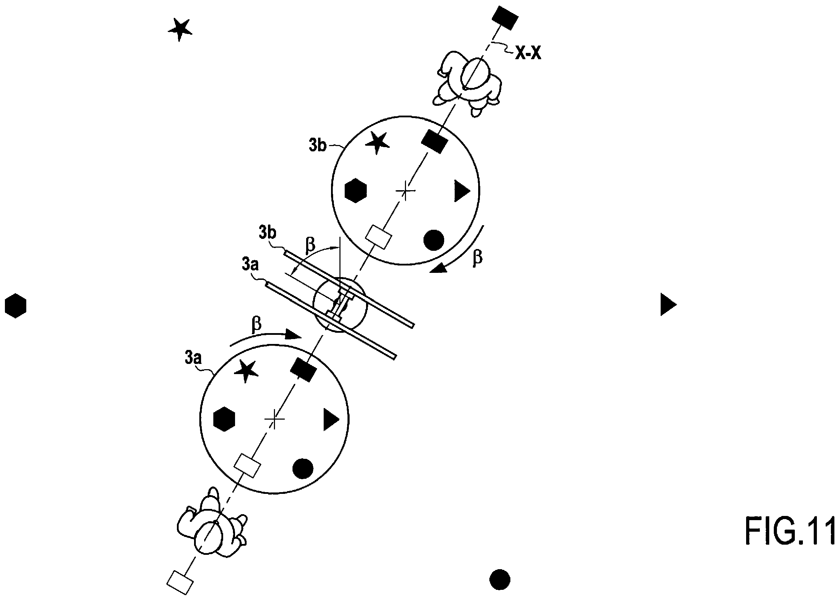

Les figures 10 et 11 illustrent un tel fonctionnement.

On schématise sur ces figures un dispositif d'orientation 1 muni de deux supports d'information 3a et 3b comme décrit précédemment.

On représente sur ces figures une vue de face de chacun des supports d'information 3a et 3b, schématisant ce que voit un utilisateur positionné face au support d'information 3a et 3b concerné.

Comme on le voit sur la figure 11, lorsque l'utilisateur réalise une rotation de la partie mobile 22 de la base 2 d'un angle β selon l'axe Z-Z, chacun des supports d'information 3a et 3b effectue une rotation afin de conserver son orientation par rapport à l'espace réel, mais ceci dans des sens contraires autour de l'axe X-X.7

Pour deux utilisateurs situés chacun d'un côté du dispositif, la rotation apparente s'opère ainsi dans le même sens.

On comprend qu'un tel mode de réalisation comprenant deux supports d'information peut également être muni d'un carter 4 comme décrit précédemment.

## Revendications

1. Système d'orientation (1) comprenant
- une base (2) configurée pour être montée sur une surface,
- un support d'information (3) monté sur la base,
la base comprenant une partie fixe (21) adaptée pour être montée sur une surface, et une partie mobile (22) montée tournante par rapport à la partie fixe (21) selon un axe de rotation vertical (Z-Z),
**caractérisé en ce que** le support d'information (3) est monté tournant par rapport à la partie mobile (22) de la base (2), selon un axe de rotation (X-X) incliné d'un angle (a) compris entre 20° et 90° par rapport à l'axe de rotation vertical (Z-Z),
le système (1) étant configuré de sorte que les rotations du support d'information (3) et de la partie mobile (22) sont liées de manière à ce que lesdites rotations conservent l'orientation dudit support d'information (3).

2. Système (1) selon la revendication 1, dans lequel le support d'information (1) comprend un ensemble d'informations cartographiques, ledit système étant configuré de sorte que la rotation des informations cartographiques présentes sur le support d'information (3) soit effectuée de manière synchrone avec la rotation de la partie mobile (22) de la base (2).

3. Système (1) selon l'une des revendications 1 ou 2, comprenant en outre un carter (4) monté fixe par rapport à la partie mobile (22) de la base (2), ledit carter (4) étant configuré de manière à recouvrir une partie du support d'information (3).

4. Système (1) selon la revendication 3, dans lequel le carter (4) est totalement ou partiellement opaque, ou totalement ou partiellement transparent.

5. Système (1) selon la revendication 4, dans lequel le carter (4) comprend une portion totalement ou partiellement opaque, et une portion totalement ou partiellement transparente.

6. Système (1) selon l'une des revendications 1 à 5, dans lequel le support d'information (3) est monté tournant par rapport à la partie mobile (22) de la base (2), selon un axe de rotation (X-X) incliné d'un angle (a) supérieur ou égal à 20° et inférieur ou égal à 90° par rapport à l'axe de rotation vertical (Z-Z) de la base (2).

7. Système (1) selon la revendication 6, dans lequel ledit angle (a) est égal à 90°.

8. Système (1) selon la revendication 7, comprenant deux supports d'information (3a, 3b) chacun monté tournant par rapport à la partie mobile (22) de la base (2) selon ledit axe de rotation (X-X), lesdits deux supports d'information (3a, 3b) étant disposés symétriquement par rapport à l'axe de rotation vertical (Z-Z) de la base (2), et étant configurés de manière à tourner selon des sens de rotation opposés l'un par rapport à l'autre autour de l'axe de rotation (X-X) lors de la rotation de la partie mobile (22) de la base autour de l'axe de rotation vertical (Z-Z).

9. Système (1) selon l'une des revendications 1 à 7, dans lequel ledit support d'information (3) est un disque.

10. Système (1) selon la revendication 9, dans lequel la projection du support d'information (3) sur l'axe de rotation vertical (Z-Z) de la base (2) définit un diamètre vertical du support d'information (3), ledit support d'information (3) comprenant des informations cartographiques réalisées de sorte que les points cardinaux correspondant au diamètre vertical du support d'information (3) correspondent aux points cardinaux définis par la projection de l'axe de rotation (X-X) du support d'information (3) sur un plan horizontal.

## Patentansprüche

1. Orientierungssystem (1), umfassend
- eine Basis (2), die dazu ausgestaltet ist, auf einer Oberfläche montiert zu sein,
- einen auf der Basis montierten Informationsträger (3),
wobei die Basis einen festen Teil (21), der dazu ausgelegt ist, auf einer Oberfläche montiert zu sein, und einen beweglichen Teil (22) umfasst, der in Bezug auf den festen Teil (21) um eine vertikale Rotationsachse (Z-Z) drehbar montiert ist,
**dadurch gekennzeichnet, dass** der Informationsträger (3) in Bezug auf den beweglichen Teil (22) der Basis (2) um eine Rotationsachse (X-X) drehbar montiert ist, die um einen Winkel (α) zwischen 20° und 90° in Bezug auf die vertikale Rotationsachse (Z-Z) geneigt ist,
wobei das System (1) derart ausgestaltet ist, dass die Rotationen des Informationsträgers (3) und des beweglichen Teils (22) auf solche Weise verbunden sind, dass die Rotationen die Orientierung des Informationsträgers (3) bewahren.

2. System nach Anspruch 1, wobei der Informationsträger (1) eine Menge von kartografischen Informationen umfasst, wobei das System derart ausgestaltet ist, dass die Rotation der kartografischen Informationen, die auf dem Informationsträger (3) vorhanden sind, auf mit der Rotation des beweglichen Teils (22) der Basis (2) synchrone Weise durchgeführt wird.

3. System (1) nach einem der Ansprüche 1 oder 2, das ferner ein Gehäuse (4) umfasst, das in Bezug auf den beweglichen Teil (22) der Basis (2) fest montiert ist, wobei das Gehäuse (4) auf solche Weise ausgestaltet ist, dass es einen Teil des Informationsträgers (3) bedeckt.

4. System (1) nach Anspruch 3, wobei das Gehäuse (4) vollständig oder teilweise undurchsichtig oder vollständig oder teilweise durchsichtig ist.

5. System (1) nach Anspruch 4, wobei das Gehäuse (4) einen vollständig oder teilweise undurchsichtigen Abschnitt und einen vollständig oder teilweise durchsichtigen Abschnitt umfasst.

6. System (1) nach einem der Ansprüche 1 bis 5, wobei der Informationsträger (3) in Bezug auf den beweglichen Teil (22) der Basis (2) um eine Rotationsachse (X-X) drehbar montiert ist, die um einen Winkel (α), der größer oder gleich 20° und kleiner oder gleich 90° ist, in Bezug auf die vertikale Rotationsachse (Z-Z) der Basis (2) geneigt ist.

7. System (1) nach Anspruch 6, wobei der Winkel (α) gleich 90° ist.

8. System (1) nach Anspruch 7, das zwei Informationsträger (3a, 3b) umfasst, die jeweils in Bezug auf den mobilen Teil (22) der Basis (2) um eine Rotationsachse (X-X) drehbar montiert sind, wobei die zwei Informationsträger (3a, 3b) symmetrisch in Bezug auf die vertikale Rotationsachse (Z-Z) der Basis (2) angeordnet sind, und auf solche Weise ausgestaltet sind, dass sie sich bei der Rotation des beweglichen Teils (22) der Basis um die vertikale Rotationsachse (Z-Z) gemäß einander entgegengesetzten Rotationsrichtungen um die Rotationsachse (X-X) drehen.

9. System (1) nach einem der Ansprüche 1 bis 7, wobei der Informationsträger (3) eine Scheibe ist.

10. System (1) nach Anspruch 9, wobei die Projektion des Informationsträgers (3) auf der vertikalen Rotationsachse (Z-Z) der Basis (2) einen vertikalen Durchmesser des Informationsträgers (3) definiert, wobei der Informationsträger (3) kartografische Informationen umfasst, die derart ausgeführt sind, dass die Himmelsrichtungen, die dem vertikalen Durchmesser des Informationsträgers (3) entsprechen, den Himmelsrichtungen entsprechen, die durch die Projektion der Rotationsachse (X-X) des Informationsträgers (3) auf einer horizontalen Ebene definiert sind.

## Claims

1. A directional guidance system (1) comprising:
• a base (2) configured to be mounted on a surface; and
• an information carrier (3) mounted on the base;
the base comprising a stationary portion (21), suitable for being mounted on a surface, and a movable portion (22) mounted to turn relative to the stationary portion (21) about a vertical axis of rotation (Z-Z);
the system being **characterized in that** the information carrier (3) is mounted to turn relative to the movable portion (22) of the base (2), about an axis of rotation (X-X) that slopes at an angle (α) lying in the range 20° to 90° relative to the vertical axis of rotation (Z-Z);
the system (1) being configured in such a manner that the turning movement of the information carrier (3) and the turning movement of the movable portion (22) are linked so that said movements conserve the orientation of said information carrier (3).

2. A system (1) according to claim 1, wherein the information carrier (1) comprises a set of map information, said system being configured so that the map information present on the information carrier (3) is turned synchronously with turning of the movable portion (22) of the base (2).

3. A system (1) according to claim 1 or claim 2, further comprising a casing (4) mounted stationary relative to the movable portion (22) of the base (2), said casing (4) being configured in such a manner as to cover a portion of the information carrier (3).

4. A system (1) according to claim 3, wherein the casing (4) is completely or partly opaque, or completely or partly transparent.

5. A system (1) according to claim 4, wherein the casing (4) comprises a portion that is completely or partly opaque, or completely or partly transparent.

6. A system (1) according to any one of claims 1 to 5, wherein the information carrier (3) is mounted to turn relative to the movable portion (22) of the base (2), about an axis of rotation (X-X) that slopes at an angle (α) that is greater than or equal to 20° and that is not greater than 90° relative to the vertical axis of rotation (Z-Z) of the base (2).

7. A system (1) according to claim 6, wherein said angle (α) is equal to 90°.

8. A system (1) according to claim 7, including two information carriers (3a, 3b) each mounted to turn relative to the movable portion (22) of the base (2) about said axis of rotation (X-X), said two information carriers (3a, 3b) being arranged symmetrically about the vertical axis of rotation (Z-Z) of the base (2) and being configured so that they turn in directions of rotation that are opposite to each other about the axis of rotation (X-X) during turning of the movable portion (22) of the base about the vertical axis of rotation (Z-Z).

9. A system (1) according to any one of claims 1 to 7, wherein said information carrier (3) is a disk.

10. A system (1) according to claim 9, wherein the projection of the information carrier (3) onto the vertical axis of rotation (Z-Z) of the base (2) defines a vertical diameter of the information carrier (3), said information carrier (3) carrying map information provided in such a manner that the cardinal points corresponding to the vertical diameter of the information carrier (3) correspond to the cardinal points defined by the projection of the axis of rotation (X-X) of the information carrier (3) onto a horizontal plane.
